# EUROPÄISCHE PATENTSCHRIFT

(11) **EP 4 012 096 B1**
(45) Veröffentlichungstag und Bekanntmachung des Hinweises auf die Patenterteilung: **06.11.2024**
(21) Anmeldenummer: 21210349.3
(22) Anmeldetag: 25.11.2021
(51) Int. Cl.: D06F 67/08, D06F 65/06, D06F 65/10, D06F 69/02, B32B 15/08, C09D 171/00

(54) **VORRICHTUNG ZUM MANGELN VON WÄSCHESTÜCKEN**
DEVICE FOR IRONING LAUNDRY ITEMS
DISPOSITIF DE REPASSAGE DE LINGE

(30) Priorität: 10.12.2020 DE 102020132981; 03.03.2021 DE 102021105151; 18.05.2021 DE 102021112866
(43) Veröffentlichungstag der Anmeldung: 15.06.2022
(73) Patentinhaber: Herbert Kannegiesser GmbH, 32602 Vlotho (DE)
(72) Erfinder: Heinz, Engelbert, 32602 Vlotho (DE); Bringewatt, Wilhelm, 32457 Porta Westfalica (DE)
(74) Vertreter: Hoener, Matthias

(56) Entgegenhaltungen:
- EP-A1- 1 985 746
- EP-B1- 2 599 843
- EP-B1- 3 051 018
- DE-A1- 4 316 940
- US-A1- 2016 238 072

## Beschreibung

Die Erfindung betrifft eine Vorrichtung zum Mangeln von Wäschestücken gemäß dem Oberbegriff des Anspruchs 1.

Bei Mangeln wird eine Seite der zu mangelnden Wäschestücke an einer sogenannten Plättfläche gleitend entlangbewegt. Bei Muldenmangeln mit einer drehend antreibbaren Mangelwalze und einer einem unteren Rand derselben zugeordnete stationäre Mangelmulde wird die Plättfläche von der zur Mangelwalze weisenden konkaven Innenseite der Mangelmulde gebildet. Bei Bändermangeln mit einem Bügelkörper, der außen größtenteils von einem Mangelband umgeben ist, bildet der vom Mangelband umschlungene, konkave Teil der Wandung des Bügelkörpers die Plättfläche.

Beim Entlanggleiten der Wäschestücke an der Plättfläche werden die Wäschestücke mit einer vor allem bei Tischwäsche gewünschten Glättung und/oder einem bestimmten Glanzgrad versehen. Diese Glättung und/oder der Glanzgrad werden im Fachjargon als "Finish" bezeichnet. Damit einerseits das gewünschte Finish entsteht, aber andererseits die Wäschestücke beim Entlanggleiten an der Plättfläche nicht beschädigt werden, ist es bisher üblich, die Plättfläche mit einem Wachs gleitfähig zu machen. Das Wachs ist außerdem so beschaffen, dass die Wäschestücke an der Plättfläche nicht anhaften, was das Ableiten gemangelter Wäschestücke von der Mangelmulde bzw. dem Bügelkörper erschwert. Das Wachsen erfordert Betriebsunterbrechungen. Je nach Größe der Mangel kann das Wachsen 20 bis 30 Minuten in Anspruch nehmen. Außerdem ist es erforderlich, das Wachsen in regelmäßigen Zeitabständen vorzunehmen, beispielsweise einmal pro Schicht. Das erfordert personellen Aufwand und verringert die Verfügbarkeit bzw. Einsatzdauer von Mangeln.

Aus der EP 3 051 018 B1 ist eine Mangel für Wäschestücke bekannt, bei der die Plättfläche der Mangelwalze mit einer nicht-haftenden Beschichtung versehen ist. Die Beschichtung kann aus Polytetrafluorethylen oder einem anderen, gute Gleiteigenschaften aufweisenden Kunststoff aus Keramik oder auch aus einer Verchromung gebildet sein. Die Beschichtung ermöglicht ein leichtes Entlanggleiten der Wäschestücke an der Plättfläche der Mangelwalze.

Die EP 1 985 746 A1 offenbart ein Handbügeleisen mit einer Sohlplatte, die aus einer Trägerplatte und einer darunter vorgesehenen Beschichtung gebildet ist. Die Unterseite der Beschichtung bildet eine auf den zu bügelnden Bekleidungsstücken entlanggleitende Glättfläche. Die Beschichtung soll Polyetheretherketon enthalten.

Aus der EP 2 599 843 B1 und der US 2016/0238072 A1 sind Polyetheretherketon enthaltende Antihaftbeschichtungen für Bleche, Walzen oder andere Maschinenteile der lebensmittel-, klebstoff-, gummi- und/oder lackverarbeitenden Industrie einerseits und für Gleitlager andererseits bekannt. Die Beschichtungen sind mehrlagig ausgebildet, wobei mindestens eine äußere Schicht zur Verbesserung ihrer Gleiteigenschaften mindestens teilweise aus Polyetheretherketon gebildet ist.

Es liegt deshalb der Erfindung die Aufgabe zugrunde, eine Vorrichtung zum Mangeln von Wäschestücken mit einer verschleißfesten Plättfläche zu schaffen, die nicht oder zumindest weniger gewachst zu werden braucht.

Eine Vorrichtung zur Lösung dieser Aufgabe weist die Merkmale des Anspruchs 1 auf. Die Beschichtung, insbesondere ihre bei Muldenmangeln zur jeweiligen drehbaren Mangelwalze weisende Außenseite bzw. ihre bei Bändermangeln zum Mangelband weisende Außenseite, bildet so die jeweilige Plättfläche. Infolge des nicht-metallischen Materials der Beschichtung verfügt die Plättfläche über gute Gleiteigenschaften und mindestens verringerte Hafteigenschaften. Die Wäschestücke können dadurch an der äußeren freiliegenden Seite der Beschichtung unbeeinträchtigt entlanglaufen, wobei die Beschichtung für ein hochqualitatives Finish sorgt. Gleichzeitig wird ein Anhaften der Wäschestücke an der Plättfläche verhindert oder zumindest so weit reduziert, dass im Auslaufbereich der Vorrichtung gemangelte Wäschestücke leicht in der Mangelmulde bzw. dem Bügelkörper ableitbar und/oder abstreifbar sind. Demnach ist die jeweilige Plättfläche von der ihre Gleitfähigkeit verbessernden und/oder das Anhaften von Wäschestücken reduzierenden nicht-metallischen Beschichtung gebildet. Dadurch kann das Wachsen ganz entfallen oder zumindest deutlich reduziert werden. Das spart Personalkosten und verbessert die Verfügbarkeit der Vorrichtung.

Nach dem Aufbringen der noch fließfähigen nicht-metallischen Beschichtung auf die entsprechend vorbehandelten metallischen Flächen des jeweiligen Muldengrundkörpers bzw. des Basiskörpers erfolgt ein Aushärten der Beschichtung. Das kann durch elektromagnetische Strahlen und/oder thermisches Aufheizen erfolgen. Vor allem das thermische Aufheizen erfolgt in einem Ofen bzw. einem Autoklaven. Hierbei erfolgt das Aushärten bei einer Temperatur zwischen 300°C und 450°C, vorzugsweise 380°C bis 400°C. Durch dieses Aushärten erhält die Beschichtung ihre endgültigen Eigenschaften. Das sind neben guten Gleiteigenschaften zur Reibungsreduzierung der zu mangelnden Wäschestücke an der Plättfläche der Beschichtung und Antihafteigenschaften zur Verringerung des Anhaftens der zu mangelnden Wäschestücke an der von der Außenseite bzw. freiliegenden Seite der Beschichtung gebildeten Plättfläche.

Die Beschichtung ist bevorzugt gebildet aus Polyetheretherketon und Fluorpolymer. Es hat sich gezeigt, dass eine solche Beschichtung der Plättfläche die notwendige Gleitfähigkeit verleiht und auch das Anhaften von Wäschestücke an der Plättfläche zumindest verringert.

Bevorzugt weist die Beschichtung mindestens ein Gemisch aus Polyetheretherketon und Fluorpolymer auf. Insbesondere überwiegt der Anteil des Polyetheretherketon am Material der Beschichtung. Indem die genannten Komponenten oder auch zusätzliche Komponenten, beispielsweise Füllstoffe, gemischt sind, entsteht eine hoch temperaturbeständige homogene Beschichtung, die der jeweiligen Plättfläche vollflächig eine gleichmäßige Gleitfähigkeit und ein gleichermaßen reduziertes Haftverhalten verleiht.

Es ist besonders vorteilhaft, dass der überwiegende Anteil der Beschichtung Polyetheretherketon ist. Bei einer solchen Beschichtung überwiegt das Polyetheretherketon. Es ist dann insbesondere vorgesehen, das Fluorpolymer dem Polyetheretherketon als Additiv hinzuzufügen, vorzugsweise hinzuzumischen.

Infolge der jeweiligen nicht-metallischen Beschichtung weist bei Muldenmangeln jede Mangelmulde einen metallischen Muldengrundkörper und die Beschichtung zur Bildung der Plättfläche der betreffenden Mangelmulde auf. Bei Bändermangeln weist der jeweilige Bügelkörper einen metallischen Basiskörper mit der nicht-metallischen Beschichtung zur Bildung der Plättfläche der Bändermangel auf.

Gemäß einer vorteilhaften Ausgestaltung der Vorrichtung ist es vorgesehen, dass die nicht-metallische Beschichtung einen verringerten elektrischen Widerstand, vorzugsweise einen verringerten Oberflächenwiderstand, aufweist. Alternativ oder zusätzlich kann es vorgesehen sein, dass die nicht-metallische Beschichtung eine vergrößerte elektrische Ableitfähigkeit aufweist. Dadurch wird eine elektrostatische Aufladung der nicht-metallischen Beschichtung wenigstens größtenteils, vorzugsweise vollständig verhindert, die dazu führen würde, dass die Wäschestücke von der Plättfläche angezogen werden und dadurch an dieser anhaften und so die mit der nicht-metallischen Beschichtung gewünschten Eigenschaften wenigstens teilweise rückgängig gemacht werden.

Bevorzugt ist es vorgesehen, das Material der nicht-metallischen Beschichtung mit mindestens einem Additiv zu versehen, das den elektrischen Widerstand der Beschichtung, vorzugsweise den elektrischen Oberflächenwiderstand, verringert und alternativ oder zusätzlich die elektrische Ableitfähigkeit der Beschichtung verbessert. Die nicht-metallische und somit an sich elektrisch nicht-leitfähige Beschichtung wird dadurch teilweise leitfähig gemacht, und zwar so weit, dass sich die Beschichtung nicht elektrisch aufladen kann und/oder antistatische Eigenschaften aufweist mit der Folge, dass hierdurch die Wäschestücke an der Plättfläche nicht hängen bleiben.

Bei einer nicht-metallischen Beschichtung aus einem Kunststoff, insbesondere Polymer, wird der Kunststoff bzw. das Polymer mit mindestens einem Additiv versehen, das seinen elektrischen Widerstand, insbesondere elektrischen Oberflächenwiderstand, verringert und/oder die elektrische Ableitfähigkeit verbessert. Wenn der Kunststoff bzw. das Polymer zur Bildung der nicht-metallischen Beschichtung aus Polyetheretherketon und Fluorpolymer gebildet ist, wird das mindestens eine Additiv diesem zugemischt, so dass ein Gemisch aus Polyetheretherketon, Fluorpolymer und dem mindestens einen Additiv entsteht. Vorzugsweise werden alle Komponenten gemeinsam gemischt.

Eine vorteilhafte Weiterbildungsmöglichkeit der Vorrichtung besteht darin, dass zumindest mit der Beschichtung zu versehende Flächen der Innenseite des jeweiligen Muldengrundkörpers oder der Außenseite des Basiskörpers des jeweiligen Bügelkörpers aufgeraut sind, vorzugsweise durch Schleifen, Strahlen und/oder Beizen. Dadurch kann die anschließend auf die zu beschichtende Fläche des Muldengrundkörpers und/oder des Basiskörpers aufgebrachte Beschichtung eine intensive Verbindung mit der Beschichtung eingehen. Das führt zu einer dauerhaften Beschichtung, die vorzugsweise die gesamte Lebensdauer der Vorrichtung hält.

Es hat sich als besonders vorteilhaft für eine zuverlässige Verbindung der Beschichtung mit dem Untergrund, nämlich dem Bügelkörper bzw. der Mangelmulde, insbesondere ihrem jeweiligen Muldengrundkörper oder Basiskörper, erwiesen, wenn die zur Beschichtung weisende Innenfläche des jeweiligen Muldengrundkörpers bzw. Außenfläche des jeweiligen Basiskörpers eine mittlere Rautiefe im Bereich von 2 µm bis 50 µm, vorzugsweise 5 µm bis 30 µm, aufweisen. Bei einer solchen Rautiefe ist einerseits eine optimale dauerhafte Verbindung der Beschichtung mit dem Untergrund, nämlich dem jeweiligen metallischen Muldengrundkörper bzw. Basiskörper, gewährleistet, aber andererseits auch eine sehr glatte Plättfläche einer freien Seite der Beschichtung bildbar. Vorzugsweise ist die Rautiefe an der freien Plättfläche der Beschichtung sehr viel geringer als die Rautiefe derjenigen Wandung des jeweiligen Muldengrundkörpers bzw. des jeweiligen Basiskörpers, worauf die Beschichtung aufgebracht ist. Vorzugsweise beträgt die Rautiefe der Plättfläche weniger als die Hälfte der Rautiefe der zu beschichtenden Wandung des jeweiligen Muldengrundkörpers bzw. des jeweiligen Grundkörpers.

Bei einer besonders vorteilhaft ausgebildeten Vorrichtung beträgt die Dicke der Beschichtung der jeweiligen Plättfläche 20 µm bis 200 µm, vorzugsweise 50 µm bis 150 µm oder 20 µm bis 100 µm. Eine solche Schichtdicke lässt sich vorzugsweise in einem einzelnen Beschichtungsschritt auf der Innenseite der Mangelmulde bzw. ihres Muldengrundkörpers und auch der Außenseite des Basiskörpers des Bügelkörpers aufbringen und ist dicke genug, um während der erwarteten Lebensdauer der Vorrichtung, insbesondere Mangel, nicht so weit abgetragen zu werden, dass sie ihre Wirkung, nämlich geringe Hafteigenschaften und gute Gleiteigenschaften, verliert.

Weiterhin ist es denkbar, die zumindest mit der Beschichtung zu versehenden Flächen der Innenseite des Muldengrundkörpers der jeweiligen Mangelmulde oder der Außenseite des Basiskörpers des jeweiligen Bügelkörpers mit einem Haftvermittler vorzubehandeln. Der Haftvermittler wird auf die gegebenenfalls vorher aufgeraute Fläche des jeweiligen Muldengrundkörpers oder Basiskörpers, zumindest soweit dieser vom Mangelband umschlungen ist, aufgebracht, und zwar bevor die Beschichtung erfolgt. Beim Haftvermittler handelt es sich bevorzugt um Silane, Titanate, Zirkonate, Polymere, Polyolefine, Plasma oder dergleichen. Diese Haftvermittler zeigen eine gute Haftung der metallischen Untergründe des Mangelgrundkörpers bzw. des Basiskörpers mit der zum Teil, insbesondere größtenteils, aus Polyetheretherketon gebildeten Beschichtung.

Bevorzugte Aufbringungsmöglichkeiten der Beschichtung auf die vorzugsweise aufgeraute und/oder mit Haftvermittler versehene Innenseite des jeweiligen Muldengrundkörpers bzw. Außenseite des jeweiligen Grundkörpers sehen die Aufbringung der jeweiligen Beschichtung im flüssigen, pastösen und/oder fließfähigen Zustand vor. Gemäß der Erfindung ist die Beschichtung auf die zu beschichtende Fläche des Muldengrundkörpers der jeweiligen Mangelmulde oder des Basiskörpers des jeweiligen Bügelkörpers aufgespritzt, aufgewalzt und/oder aufgerakelt. Hiermit lässt sich die Beschichtung in der gewünschten ausreichenden Schichtdicke aufbringen, und zwar insbesondere in einem einzigen Beschichtungsdurchgang.

Bei Muldenmangeln mit mehreren aufeinanderfolgenden Mangelwalzen und einer jeder Mangelwalze zugeordneten eigenen Mangelmulde, die zwischen aufeinanderfolgenden Mangelmulden metallische Mangelbrücken aufweisen, ist es vorgesehen, auch die zum Hinübergleiten der Wäschestücke über die Mangelbrücken dienenden Flächen derselben mit einer das Anhaften der Wäschestücke und/oder die Gleitfähigkeit der Mangelbrücke verbessernden nicht-metallischen Beschichtung zu versehen, die vorzugsweise auch Polyetheretherketon und Fluorpolymer aufweist. Dadurch ist der gesamte Weg der Wäschestücke durch die mehrere aufeinanderfolgende Mangelwalzen und Mangelbrücken aufweisenden Muldenmangel beschichtet, so dass nicht nur die Plättflächen der Mangelmulden, sondern auch die Gleitflächen der jeweiligen Mangelbrücke Beschichtungen aufweisen und dadurch gleich gute Gleiteigenschaften zur Reibungsreduzierung und Antihafteigenschaften zur Verringerung des Anhaftens der Wäschestücke aufweisen.

Die nicht-metallische Beschichtung der zum Hinüberleiten der Wäschestücke von einer Mangelmulde zur darauffolgenden dienenden Mangelbrücke ist vorzugsweise genauso ausgebildet und hergestellt, wie es in den Ansprüchen für die Beschichtungen der jeweiligen Mangelmulde beschrieben ist. Gleiches gilt für die Vorbehandlung der zu beschichtenden konkaven Innenseite des Muldengrundkörpers der jeweiligen Mangelmulde.

In vorstehend beschriebener Weise können auch eventuelle Mangelbrücken zwischen aufeinanderfolgenden Bügelkörpern von Bändermangeln ausgebildet sein.

Bevorzugte Ausführungsbeispiele der Erfindung werden nachfolgend anhand der Zeichnung näher erläutert. In dieser zeigen:
- Fig. 1: eine schematische Seitenansicht einer Muldenmangel mit nur einer einzigen Mangelwalze,
- Fig. 2: eine schematische Seitenansicht einer Muldenmangel mit zwei aufeinanderfolgenden Mangelwalzen,
- Fig. 3: eine schematische Seitenansicht einer Bändermangel,
- Fig. 4: einen vergrößerten Teil eines Querschnitts durch eine Mangelmulde der Muldenmangel der Fig. 1 bzw. 2, und
- Fig. 5: einen vergrößerten Teil eines Querschnitts durch einen Bügelkörper der Bändermangel gemäß Fig. 3.

Die Figuren zeigen drei verschiedene Ausführungsbeispiele von Vorrichtung zum Mangeln von Wäschestücken. Bei den Wäschestücken handelt es sich vor allem um solche, die üblicherweise gemangelt werden, beispielsweise Tischwäsche und Bettwäsche. Die Wäschestücke sind in den Figuren nicht dargestellt.

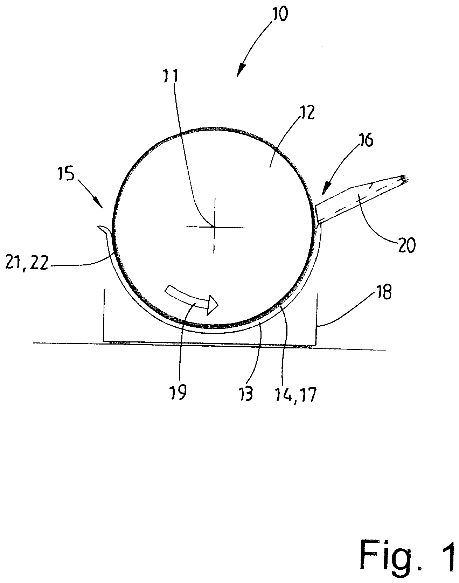

Bei der in der Fig. 1 dargestellten Vorrichtung handelt es sich um eine Muldenmangel 10 mit nur einer einzigen um eine horizontale Drehachse 11 drehend antreibbaren Mangelwalze 12. Der Mangelwalze 12 ist eine ortsfeste Mangelmulde 13 zugeordnet. Die Mangelmulde 13 umgibt etwa halbkreisförmig die untere Hälfte der Mangelwalze 12. Die Mangelmulde 13 kann flexibel, aber auch starr ausgebildet sein. Die Mangelmulde 13 ist beheizbar, um die zum Mangeln, und zwar insbesondere Glätten und Endtrocknen, der Wäsche erforderliche Energie zur Verfügung zu stellen. Die Beheizung der Mangelmulde 13 kann auf verschiedene Weise erfolgen. Vorzugsweise wird die Mangelmulde 13 mit Dampf, einem flüssigen Wärmeträgermedium wie beispielsweise Thermoöl, beheizt. Dazu sind im Inneren der Mangelmulde 13 Strömungskanäle angeordnet. Es ist aber auch denkbar, die Mangelmulde 13 elektrisch zu beheizen.

Zwischen einer konkav nach innen gewölbten Innenseite 14 der Mangelmulde 13 und einer äußeren Mantelfläche der Mangelwalze 12 ist ein sich im Bereich der Mangelmulde 13 erstreckender, etwa halbkreisförmiger Mangelspalt gebildet. Infolge der drehend angetriebenen Mangelwalze 12 werden die zu mangelnden Wäschestücke von einer Einlaufseite 15 zu einer Auslaufseite 16 der Muldenmangel 10 durch den Mangelspalt transportiert. Dabei gleiten die zu mangelnden Wäschestücke an der Innenseite 14 der Mangelmulde 13 entlang. Die Innenseite 14 der Mangelmulde 13 verfügt dadurch über eine Plättfläche 17.

In der Fig. 1 ist schematisch und/oder teilweise ein Gestell 18 der Muldenmangel 10 dargestellt, an der die Mangelmulde 13 ortsfest und die Mangelwalze 12 um die Drehachse 11 in der durch einen Pfeil angedeuteten Drehrichtung 19 drehbar gelagert ist. Des Weiteren ist in der Fig. 1 ein der Auslaufseite 16 zugeordneter Abförderer 20 dargestellt, von dem gemangelte Wäschestücke beispielsweise einer Faltmaschine zuführbar sind. Zur Einlaufseite 15 gelangen zu mangelnde ausgebreitete Wäschestücke über beispielsweise einen nicht dargestellten Zuführförderer. Dieser transportiert von einer Eingabemaschine ausgebreitete Wäschestücke in die Einlaufseite 15 der Muldenmangel 10.

In besonderer Weise ist die Mangelmulde 13 der Muldenmangel 10 ausgebildet. Diese verfügt nämlich über einen Muldengrundkörper 21 aus einem metallischen Material, vorzugsweise Stahl. Bei dem Stahl kann es sich insbesondere um martensitischen Stahl (Schwarzstahl) und/oder austenitischen Stahl (rostfreien Stahl) und/oder Duplexstahl handeln. Des Weiteren verfügt die Mangelmulde 13 über eine nicht-metallische Beschichtung 22 auf ihrer zur Mangelwalze 12 weisenden konkaven Seite des Muldengrundkörpers 21. Die Mangelmulde 13 setzt sich somit aus dem metallischen Mangelgrundkörper 21 und der innenseitig mit demselben dauerhaft verbundenen nicht-metallischen Beschichtung 22 zusammen.

Aufgrund der Beschichtung 22 auf der Innenseite 14 des Muldengrundkörpers 21 bildet die vom Muldengrundkörper 21 weggerichtete Seite der Beschichtung 22 die Plättfläche 17 auf der Innenseite 14 der Mangelmulde 13. Die Beschichtung 22 erstreckt sich über die gesamte Innenseite 14 der Mangelmulde 13. Dadurch ist die gesamte Plättfläche 17 von der zu den Wäschestücken bzw. der Mangelwalze 12 gerichteten freien Seite der Beschichtung 22 gebildet. Die Beschichtung 22 weist vorzugsweise eine Schichtdicke im Bereich von 20 µm bis 200 µm, insbesondere 50 µm bis 150 µm, auf. Alternative vorteilhafte Schichtdicken können zwischen 30 µm und 60 µm liegen.

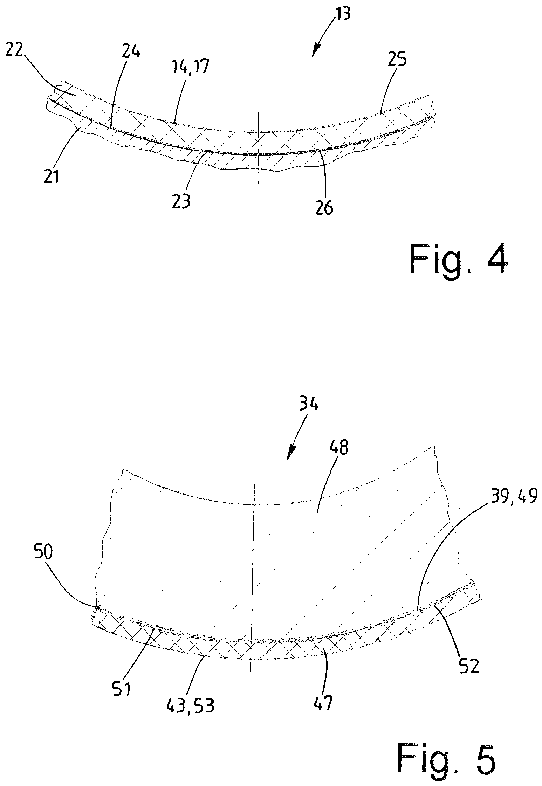

Im in der Fig. 4 gezeigten vergrößerten teilweisen Querschnitt durch die Mangelmulde 13 ist der Schichtaufbau derselben dargestellt. Hier ist ein unter der Beschichtung 22 liegender und an derselben angrenzender Teil des metallischen Muldengrundkörpers 21 erkennbar. An einer konkaven Oberseite 23 des metallischen Muldengrundkörpers 21 grenzt eine konvexe Unterseite 24 der Beschichtung 22 an. Es ist aus der Darstellung der Fig. 4 auch ersichtlich, dass eine konkave Oberseite 25 der Beschichtung 22 die Innenseite 14 und gleichzeitig die Plättfläche 17 der Mangelmulde 13 bildet.

Die Beschichtung 22 ist dauerhaft fest mit dem Muldengrundkörper 21 verbunden. In der Darstellung der Fig. 4 handelt es sich dabei um eine mittelbare Verbindung. Diese Verbindung wird erreicht durch eine Haftschicht 26 zwischen der Oberseite 23 des Muldengrundkörpers 21 und der Unterseite 24 der Beschichtung 22. Alternativ ist aber auch eine direkte dauerhafte und feste Verbindung der Oberseite 23 des Muldengrundkörpers 21 mit der Unterseite 24 der Beschichtung 22 denkbar. In diesem Fall kann die Haftschicht 26 entfallen.

Die Oberseite 23 des Muldengrundkörpers 21 kann vor Aufbringung der Beschichtung 22 vorbehandelt sein. Eine Art der Vorbehandlung besteht darin, die Oberseite 23 des metallischen Muldengrundkörpers 21 aufzurauen. Beispielsweise kann die Vorbehandlung durch Schleifen, Strahlen, Beizen oder auch Kombinationen der genannten Vorbehandlungsmaßnahmen erfolgen. Die Oberseite 23 des Mangelgrundkörpers 21 kann so weit aufgeraut werden, dass sie eine mittlere Rautiefe aufweist. Diese Rautiefe kann im Bereich von 2 µm bis 50 µm, vorzugsweise 5 µm bis 30 µm, liegen.

Eine andere Art der Vorbehandlung der mit der Beschichtung 22 zu versehenen Oberseite 23 des Muldengrundkörpers 21 kann darin bestehen, dass alternativ oder zusätzlich zum Aufrauen ein Haftvermittler vor der Beschichtung auf die Oberseite 23 des Muldengrundkörpers 21 aufgebracht wird. Der Haftvermittler kann durch Aufsprühen, Aufspritzen oder Aufstreichen auf die Oberseite 23 aufgebracht werden. Als Haftvermittler kommen beispielsweise Silane, Titanate, Zirkunate, Polymere oder Polyolefine in Betracht. Auch Kombinationen oder Mischungen derselben sind denkbar. Die genannten Materialien und Mischungen derselben bilden die Haftschicht 26, deren Schichtdicke vorzugsweise geringer ist als die Schichtdicke der Beschichtung 22. So kann die Dicke der Haftschicht 26 beispielsweise 10 µm bis 50 µm betragen. Nachdem der zur Bildung der Haftschicht 26 auf die Oberfläche 23 des Mangelgrundkörpers 21 aufgebrachte Haftvermittler allein oder durch Bestrahlen und/oder Erhitzen ausgehärtet ist, wird auf die Haftschicht 26 die Beschichtung 22 aufgebracht.

Die Beschichtung 22 aus einem nicht-metallischen Material ist vorzugsweise mindestens teilweise aus einem Kunststoff gebildet. Bevorzugt besteht die Beschichtung 22 aus Polyetheretherketon und Fluorpolymere, und zwar ein Gemisch aus beiden, wobei der Anteil des Polyetheretherketons überwiegt. Vorzugsweise wird das Fluorpolymer dem Polyetheretherketon nur als Additiv zugegeben, wobei das Fluorpolymer insbesondere maximal ein Zehntel des Anteils des Polyetheretherketons ausmacht. Durch die genannte Mischung aus Polyetheretherketon und Fluorpolymer erhält die daraus gebildete Beschichtung 22 nicht nur Antihafteigenschaften, wobei das Anhaften der Wäschestücke an die Plättfläche 17 verringert wird, vielmehr auch gute Gleiteigenschaften, wodurch die Reibung der an der Plättfläche 17 beim Mangeln entlanggleitenden Wäschestücke reduziert wird. Um diese Eigenschaften zu begünstigen, ist die von der freien Seite der Beschichtung 22 gebildete Plättfläche 17 und somit die Innenseite 14 der Mangelmulde 13 relativ glatt. Gegebenenfalls kann die die Plättfläche 17 bildende freiliegende Oberseite 25 der Beschichtung nach ihrer Fertigstellung und vollständigen Aushärtung durch zum Beispiel Polieren in ihrem Glättegrad erhöht werden.

Die Beschichtung 22 ist vorzugsweise elektrisch leitfähig bzw. semi-leitfähig oder leitfähig bzw. semi-leitfähig gemacht. Zu diesem Zweck ist die Beschichtung 22 mit mindestens einem Additiv versehen, der ihr Material, insbesondere Kunststoff, eine elektrische Leitfähigkeit verleiht, indem das mindestens eine Additiv den elektrischen Widerstand, insbesondere Oberflächenwiderstand, verringert und/oder dem Material der Beschichtung 22 eine verbesserte elektrische Ableitfähigkeit verleiht. Die elektrische Leitfähigkeit der Beschichtung 22 ist bevorzugt derart, dass der elektrische Widerstand um mindestens drei Zehnerpotenzen geringer ist als bei einem reinen Kunststoff ohne ein dessen Leitfähigkeit verbesserndes Additiv. Die elektrische Leitfähigkeit der Beschichtung 22 kann vorzugsweise im Bereich von 10³ Ohm bis zum 10⁹ Ohm liegen, vorzugsweise im Bereich von 10³ Ohm bis 10⁶ Ohm.

Als Additiv zur Verbesserung der Leitfähigkeit der Beschichtung 22 kommen Rußpigmente, Graphit, Graphen, Kohlefasern, Kohlenstoffnanofasern, leitfähig dotierter Glimmer, leitfähig dotierte Fasern oder auch metallische Partikel, wie zum Beispiel Silber oder Kupfer, in Betracht. Die verbesserte Leitfähigkeit der Beschichtung 22 kann durch ein einziges der genannten Additive herbeigeführt werden, aber auch eine Mischung mehrerer der genannten Additive.

Bei einer Beschichtung 22 aus einem Gemisch aus Polyetheretherketon und Fluorpolymer wird vorzugsweise das mindestens eine Additiv dem Polyetheretherketon und Fluorpolymer hinzugegeben und zusammen vermischt. Es ist aber auch denkbar, dem Polyetheretherketon das mindestens eine Additiv hinzuzumischen, bevor das Fluorpolymer hinzugegeben und hiermit vermischt wird. Ebenso kann das mindestens eine Additiv zunächst mit dem Fluorpolymer vermischt werden, bevor dieses wiederum mit Polyetheretherketon vermischt wird.

Die Beschichtung 22 wird nach dem Aushärten der Haftschicht 26 im fließfähigen bzw. flüssigen Zustand auf die freiliegende Seite der Haftschicht 26 aufgebracht. Das kann durch Aufspritzen oder auch Aufsprühen, Aufrollen oder Rakeln geschehen. Nach der Aufbringung der Beschichtung 22 auf die Haftschicht 26 erfolgt ein Aushärten der Beschichtung. Dieses kann in einem Ofen, insbesondere Autoklaven, bei Temperaturen bis zu 400°C geschehen, insbesondere bei Temperaturen im Bereich von 300°C bis 400°C. Alternativ oder zusätzlich kann das Aushärten durch Bestrahlen mit elektromagnetischen Strahlen, beispielsweise IR-Strahlen oder UV-Strahlen, erfolgen.

Alternativ ist es denkbar, die Haftschicht 26 direkt auf die zuvor aufgeraute Oberseite 23 des Mangelgrundkörpers 21 aufzubringen, also auf die zusätzliche Haftschicht 26 zwischen dem Mangelgrundkörper 21 und der Beschichtung 22 zu verzichten. Auch ist es denkbar, bei Verwendung einer Haftschicht 26 auf das vorangehende Aufrauen der Oberseite 23 des metallischen Mangelgrundkörpers 21 zu verzichten.

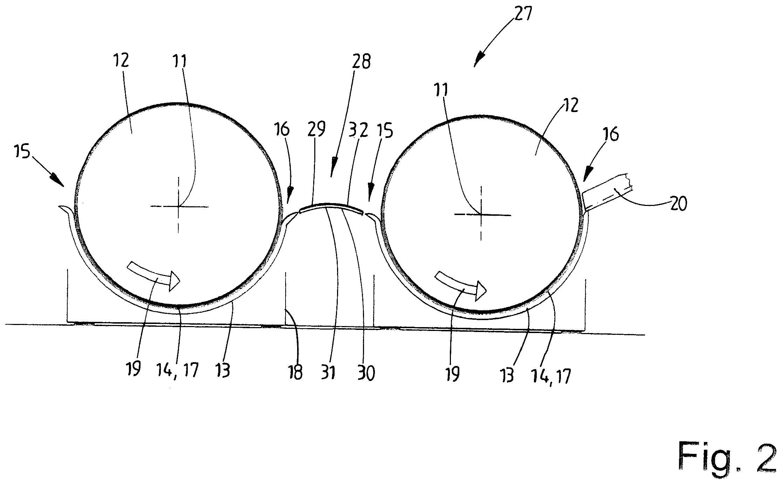

Die Fig. 2 zeigt eine Muldenmangel 27 mit jeweils zwei aufeinanderfolgenden Mangelwalzen und Mangelmulden. Hinsichtlich der Ausbildung der Mangelwalzen und der Mangelmulden wird auf die vorangegangene Beschreibung der Muldenmangel 10 Bezug genommen und insoweit gleiche Bezugsziffern verwendet.

Bei der Mangelmulde 27 der Fig. 2 sind beide Mangelwalzen 12 und Mangelmulden 13 gleichermaßen ausgebildet. Denkbar ist es aber auch, dass die aufeinanderfolgenden Mangelwalzen 12 unterschiedliche Durchmesser aufweisen.

Bei der in der Fig. 2 gezeigten Muldenmangel 27 mit zwei aufeinanderfolgenden Mangelwalzen 12 und Mangelmulden 13 ist zwischen den aufeinanderfolgenden Mangelmulden 13 eine sogenannte Mangelbrücke 28 angeordnet, und zwar vorzugsweise ortsfest. Die Mangelbrücke 28 verbindet die Auslaufseite 16 der vorderen Mangelwalze 12 mit der Einlaufseite 15 der darauffolgenden Mangelwalze 12. Dabei gleiten die eine vorherige Mangelwalze 12 verlassenden Wäschestücke über die Mangelbrücke 28 hinweg in die Einlaufseite 26 der nachfolgenden Mangelwalze 12 und der ihr zugeordneten Mangelmulde 13.

Die Mangelbrücke 28 ist wie die jeweilige Mangelmulde 13 aus Metall, insbesondere Stahl, gebildet. Es kann sich dabei auch um gewöhnlichen Stahl (Schwarzstahl) und/oder austenitischen Stahl und/oder Duplexstahl handeln. Außerdem kann die Mangelbrücke 28 genauso wie die jeweilige Mangelmulde 13 beheizt sein. Die Beheizung der Mangelbrücke 28 kann auf gleiche Weise erfolgen wie die jeweilige Mangelmulde 13, aber auch auf einer hiervon abweichenden Weise, insbesondere dann, wenn die Temperatur der beheizten Mangelbrücke 28 geringer ist als die Temperatur der jeweils beheizten Mangelmulde 13.

Die Mangelbrücke 28 weist analog zu den Mangelmulden 13 einen unteren metallischen Brückengrundkörper 30 mit einer konvexen Oberseite und einer darauf aufgebrachten Beschichtung 31 auf. Die Beschichtung 31 ist mit dem Brückengrundkörper 30 dauerhaft fest verbunden. Eine freiliegende obere Seite der Beschichtung 31 bildet eine Gleitfläche 32, auf der Wäschestücke von der ersten Mangelwalze 12 und der ihr zugeordneten Mangelmulde 13 zur nachfolgenden zweiten Mangelwalze 13 und der dieser zugeordneten Mangelmulde 13 gelangen.

Die Beschichtung 31 der Mangelbrücke 28 der Mangelmulden 13 ist auch aus einem nicht-metallischen Material, insbesondere Kunststoff, gebildet, der demjenigen der Beschichtung 22 entspricht und gegebenenfalls auch mit mindestens einem Additiv zur Verbesserung der elektrischen Leitfähigkeit und/oder verbesserten elektrischen Ableitfähigkeit versehen ist. Dann weist auch die Beschichtung 31 antistatische Eigenschaften auf. Auch in den Abmessungen und der sonstigen Ausbildung entspricht die Beschichtung 31 der Mangelbrücke 28 der Beschichtung 22 der Mangelmulden 13. Gleiches gilt für die Herstellung der Beschichtung 31 und ihren Eigenschaften. Insofern wird hinsichtlich der Beschichtung 31 Bezug genommen auf den gesamten vorstehenden Offenbarungsgehalt zur Beschichtung 22 der Mangelmulde 13 der Fig. 1.

Die Erfindung eignet sich auch für Muldenmangeln, die mehr als zwei in der Fig. 2 gezeigte aufeinanderfolgende Mangelwalzen 12 und diesen zugeordnete Mangelmulden 13 mit inneren Beschichtungen 22 aufweisen. Solche Muldenmangeln verfügen über mehrere Mangelbrücken 28 auf, die jeweils eine Beschichtung 29 aufweisen.

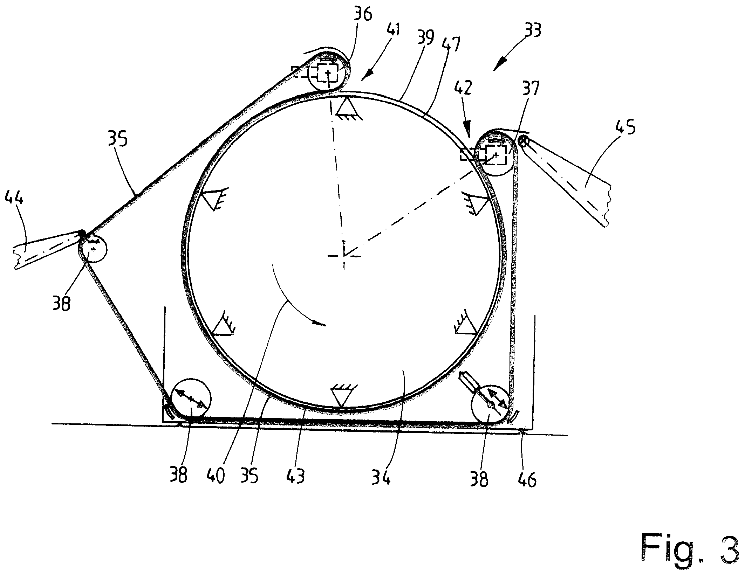

Die Fig. 3 zeigt eine als Bändermangel 33 ausgebildete Vorrichtung zum Mangeln, nämlich Glätten und Trocknen, von Wäschestücken. Die in der Figur gezeigte Bändermangel 33 verfügt über einen zylindrischen Bügelkörper 34 und ein den Umfang des zylindrischen Bügelkörpers 34 größtenteils umgebendes Mangelband 35. Statt eines Mangelbands 35 kann die Bändermangel 33 auch mehrere nebeneinanderliegende, schmalere Mangelbänder 35 aufweisen.

Das endlose Mangelband 35 verfügt über ein Trum, das den Bügelkörper 35 größtenteils umschlingt und ein anderes Trum, das als Rücklauftrum dient. Das Rücklauftrum des Mangelbands 35 ist um eine Aufleittrommel 36, eine Ableittrommel 37 und Umlenktrommeln 38 geführt. Mindestens eine dieser Trommeln ist drehend antreibbar. Dadurch ist bei der in der Fig. 3 gezeigten Bändermangel 33 das einen Großteil des Umfangs des Bügelkörpers 34 umschlingende Trum des Mangelbands 35 außen an einer zylindrischen Mantelfläche 39 des Bügelkörpers 34 entlangbewegbar, und zwar gemäß der Darstellung der Fig. 3 in der durch einen Pfeil angedeuteten Umlaufrichtung 40. Die Aufleittrommel 36 befindet sich im Einlaufbereich 41 der Bändermangel 33, während sich die Ableittrommel 37 im Auslaufbereich 42 der Bändermangel 33 befindet.

Mindestens die Umlenktrommeln 38, die Ableittrommel 37 und die Aufleitrommel 36 sowie der Bügelkörper 34 der Bändermangel 33 sind an einem nur andeutungsweise in der Fig. 3 dargestellten gemeinsamen Gestell 46 gelagert.

Zwischen dem Bügelkörper 34 und dem diesen teilweise umschlingenden Trum der Bändermangel 34 befindet sich ein Mangelspalt, durch den die zu mangelnden Wäschestücke in Umlaufrichtung 40 vom Einlaufbereich 41 bis zum Auslaufbereich 42 gleitend an der zylindrischen Mantelfläche des vorzugsweise stillstehenden Bügelkörpers 34 entlanggleitet. Dadurch dient bei der Bändermangel 33 die zylindrische Mantelfläche 39 des Bügelkörpers 34 als Plättfläche 43.

Alternativ zum gezeigten Ausführungsbeispiel ist es denkbar, dass der zylindrische Bügelkörper 34 drehend antreibbar ist, aber so, dass eine Geschwindigkeitsdifferenz zwischen der Mantelfläche des Bügelkörpers 34 und dem diese umschlingenden Trum des Mangelbands 35 entsteht, wodurch auch bei drehend angetriebenem Bügelkörper 34 die zu mangelnden Wäschestücke mit Schlupf bzw. gleitend an der zylindrischen Plättfläche 34 des Bügelkörpers 34 entlangbewegt werden. Bei einem nicht drehend angetriebenen Bügelkörper 34 ist es auch denkbar, dass dieser keinen zylindrischen Querschnitt aufweist, sondern einen davon abweichenden unrunden Querschnitt, beispielsweise einen elliptischen bzw. ovalen Querschnitt.

Bei der in der Fig. 3 gezeigten Bändermangel 33 werden beispielsweise von einer die Wäschestücke ausbreitenden Eingabemaschine kommende Wäschestücke über einen teilweise in der Fig. 3 dargestellten Zuführförderer 44 oben auf das rücklaufende Trum des Mangelbands 35 vor dem Einlaufbereich 41 abgelegt und so vom Mangelband 35 in den Einlaufbereich 41 hineintransportiert. Gemangelte Wäschestücke werden am Auslaufbereich 42 von einem ebenfalls teilweise dargestellten Abförderer 45 zu einer der Bändermangel 33 folgenden Faltmaschine oder einer sonstigen Wäschebehandlungsmaschine transportiert.

Bei der Bändermangel 33 weist der Bügelkörper 34 eine nicht-metallische Beschichtung 47 auf. Die Außenseite dieser Beschichtung 47 bildet bei der Bändermangel 33 die Plättfläche 43. Die Beschichtung ist in der Fig. 5, die einen teilweisen vergrößerten Querschnitt durch den Bügelkörper 34 zeigt, detailliert dargestellt. Demnach wird der zylindrische Bügelkörper 34 der Bändermangel 33 gebildet von einem Basiskörper 48 aus einem metallischen Material, das demjenigen der Mangelmulde 13 entsprechen kann. Bei der Darstellung der Fig. 5 ist auf der konvexen Außenseite 49 des Basiskörpers 48 eine Haftschicht 50 aufgebracht. Auf eine ebenfalls konvexe Außenseite 51 der Haftschicht 50 ist eine Beschichtung 47 mit ihrer konkaven Innenseite 52 und dabei mit dem Basiskörper 48 dauerhaft fest verbunden. Eine konvexe Außenseite 53 der Beschichtung 47 bildet die freiliegende Plättfläche 43 des Bügelkörpers 34 der Bändermangel 33. Alternativ kann die Beschichtung 47 auch unmittelbar auf die vorzugsweise dazu durch zum Beispiel Aufrauen vorbehandelte Außenseite 49 des Basiskörpers 48 aufgebracht sein. Dann kann die Haftschicht 50 entfallen.

Bevorzugt erstreckt sich die Beschichtung 47 über den gesamten Umfang des Bügelkörpers 34 bzw. des Basiskörpers 48 derselben. Es ist auch denkbar, die Beschichtung 47 nur auf einen solchen Teilumfang des Basiskörpers 48 des Bügelkörpers 34 aufzubringen, der sich über den vom Mangelband 35 umschlungenen Teilbereich der zylindrischen Mantelfläche 39 des Bügelkörpers 34 erstreckt, weil nur dieser als Plättfläche 43 dient.

Die Beschichtung 47 der Bändermangel 33 ist prinzipiell genauso gebildet wie die Beschichtung 22 der Muldenmangel 10. Das gilt nicht nur für das nicht-metallische Material zur Bildung der Beschichtung 47, sondern auch für die Abmessung, die Herstellung und die Eigenschaften der Beschichtung 47 sowie die Art der Verbindung der Beschichtung 47 mit dem Basiskörper 48 des Bügelkörpers 34 der Bändermangel 33. Vor allem kann auch bei der Beschichtung 47 durch mindestens ein Additiv die elektrische Leitfähigkeit, insbesondere Oberflächenleitfähigkeit, und/oder elektrische Ableitfähigkeit vergrößert bzw. verbessert sein.

### Bezugszeichenliste:

| | | | |
|---|---|---|---|
| 10 | Muldenmangel | 42 | Auslaufbereich |
| 11 | Drehachse | 43 | Plättfläche |
| 12 | Mangelwalze | 44 | Zuführförderer |
| 13 | Mangelmulde | 45 | Abförderer |
| 14 | Innenseite | 46 | Gestell |
| 15 | Einlaufseite | 47 | Beschichtung |
| 16 | Auslaufseite | 48 | Basiskörper |
| 17 | Plättfläche | 49 | Außenseite |
| 18 | Grundgestell | 50 | Haftschicht |
| 19 | Drehrichtung | 51 | Außenseite |
| 20 | Abförderer | 52 | Innenseite |
| 21 | Muldengrundkörper | 53 | Außenseite |
| 22 | Beschichtung | | |
| 23 | Oberseite | | |
| 24 | Unterseite | | |
| 25 | Oberseite | | |
| 26 | Haftschicht | | |
| 27 | Muldenmangel | | |
| 28 | Mangelbrücke | | |
| 29 | Beschichtung | | |
| 30 | Brückengrundkörper | | |
| 31 | Beschichtung | | |
| 32 | Gleitfläche | | |
| 33 | Bändermangel | | |
| 34 | Bügelkörper | | |
| 35 | Mangelband | | |
| 36 | Aufleittrommel | | |
| 37 | Ableittrommel | | |
| 38 | Umlenktrommel | | |
| 39 | zylindrische Mantelfläche | | |
| 40 | Umlaufrichtung | | |
| 41 | Einlaufbereich | | |

## Patentansprüche

1. Vorrichtung zum Mangeln von Wäschestücken mit mindestens einer drehend antreibbaren Mangelwalze (12) und einer der jeweiligen Mangelwalze (12) zugeordneten Mangelmulde (13) oder wenigstens einem Bügelkörper (34), dem ein Mangelband (35) zugeordnet ist, das den wenigstens einen Bügelkörper (34) größtenteils umschlingt, wobei eine Innenseite (14) der Mangelmulde (13) oder eine Außenseite (49) des Bügelkörpers (34) eine Plättfläche (17; 43) bilden, an der die zu mangelnden Wäschestücke gleitend entlangbewegbar sind, und die jeweilige Mangelmulde (13) oder der jeweilige Bügelkörper (34) an ihrer jeweiligen zu den Wäschestücken weisenden Seite eine nicht-metallische Beschichtung (22; 47) aufweisen, deren mit den Wäschestücken in Kontakt kommende Seite die Plättfläche (17; 43) bildet, **dadurch gekennzeichnet, dass** die Beschichtung (22; 47) auf die zu beschichtende Fläche des Muldengrundkörpers (21) der jeweiligen Mangelmulde (13) oder des Basiskörpers (48) des jeweiligen Bügelkörpers (34) aufgespritzt, aufgewalzt und/oder aufgerakelt ist und die Beschichtung (22, 47) nach ihrer Aufbringung ausgehärtet wird in einem Ofen oder einem Autoklaven bei Temperaturen zwischen 300°C und 450°C.

2. Vorrichtung nach Anspruch 1, **dadurch gekennzeichnet, dass** die nicht-metallische Beschichtung (22; 47) ein Polymer-Material mit guten Gleiteigenschaften und/oder Antihafteigenschaften, vorzugsweise Polyetheretherketon und Fluorpolymer, aufweist.

3. Vorrichtung nach Anspruch 1 oder 2, **dadurch gekennzeichnet, dass** die Beschichtung (22; 47) ein Gemisch aus Polyetheretherketon und Fluorpolymer aufweist, wobei vorzugsweise der Anteil am Polyetheretherketon überwiegt und/oder dem Polyetheretherketon der Beschichtung (22; 47) Fluorpolymer als Additiv hinzugemischt ist.

4. Vorrichtung nach einem oder mehreren der vorhergehenden Ansprüche, **dadurch gekennzeichnet, dass** das Material der nicht-metallischen Beschichtung (22; 47) einen verringerten elektrischen Widerstand, vorzugsweise verringerten elektrischen Oberflächenwiderstand, und/oder eine vergrößerte elektrische Ableitfähigkeit aufweist.

5. Vorrichtung nach einem oder mehreren der vorhergehenden Ansprüche, **dadurch gekennzeichnet, dass** das Material der nicht-metallischen Beschichtung (22; 47) mindestens ein Additiv zur Verringerung des elektrischen Widerstands, vorzugsweise Oberflächenwiderstands, und/oder eine vergrößerte elektrische Ableitfähigkeit aufweist.

6. Vorrichtung nach einem der vorhergehenden Ansprüche, **dadurch gekennzeichnet, dass** die nicht-metallische Beschichtung eine Schichtdicke im Bereich von 20 µm bis 200 µm, vorzugsweise 50 µm bis 150 µm, aufweist.

7. Vorrichtung nach einem der vorhergehenden Ansprüche, **dadurch gekennzeichnet, dass** die jeweilige Mangelmulde (13) einen Muldengrundkörper (21) aufweist, auf dessen zur jeweiligen Mangelwalze (12) weisenden Fläche die Beschichtung (22) aufgebracht ist oder der Bügelkörper (34) einen Basiskörper (48) aufweist, auf dessen zum Mangelband (35) weisenden Fläche die Beschichtung (47) aufgebracht ist, wobei vorzugsweise vor dem Aufbringen der Beschichtung (22, 47) die jeweilige Fläche aufgeraut ist, insbesondere durch Schleifen, Strahlen und/oder Beizen.

8. Vorrichtung nach Anspruch 7, **dadurch gekennzeichnet, dass** die Flächen, insbesondere aufgerauten Flächen, des jeweiligen Muldengrundkörpers (21) bzw. des jeweiligen Basiskörpers (48) eine mittlere Rautiefe im Bereich von 2 µm bis 50 µm, vorzugsweise 5 µm bis 30 µm, aufweisen und/oder zumindest die mit der jeweiligen Beschichtung (22; 47) zu versehenen Flächen des Muldengrundkörpers (21) bzw. des jeweiligen Basiskörpers (48) mit einem Haftvermittler vorbehandelt sind, wobei der Haftvermittler vorzugsweise ein Silan, Titanat, Zirkonat, Polymer, Polyolefin, Plasma und/oder eine Mischung mehrerer der vorstehend genannten Substanzen ist.

9. Vorrichtung nach einem der vorhergehenden Ansprüche, **dadurch gekennzeichnet, dass** die Beschichtung (22; 47) im flüssigen, pastösen und/oder fließfähigen Zustand auf die zu beschichtenden Flächen, vorzugsweise vorher aufgerauten und/oder mit mindestens einem Haftvermittler versehenen Flächen, des Muldengrundkörpers (21) der jeweiligen Mangelmulde (13) bzw. des Basiskörpers (48) des jeweiligen Bügelkörpers (34) aufgebracht ist und anschließend ein Aushärten der Beschichtung (22; 47) erfolgt, beispielsweise durch elektromagnetische Strahlen und/oder thermisch.

10. Vorrichtung nach einem der vorhergehenden Ansprüche, **dadurch gekennzeichnet, dass** die Beschichtung (22, 47) nach ihrer Aufbringung ausgehärtet wird in einem Ofen oder einem Autoklaven bei Temperaturen zwischen 380°C bis 400°C.

11. Vorrichtung nach einem der vorhergehenden Ansprüche, **dadurch gekennzeichnet, dass** bei Muldenmangeln (27) mit mehreren aufeinanderfolgenden Mangelmulden (13) bzw. bei Bändermangeln (33) mit mehreren aufeinanderfolgenden Bügelkörpern (34) zwischen aufeinanderfolgenden Mangelmulden (13) bzw. Bügelkörpern (34) jeweils eine Mangelbrücke (28) angeordnet ist, wobei die zum Hinübergleiten der Wäschestücke über die jeweilige Mangelbrücke (28) dienende Gleitfläche (32) an ihrer zu den Wäschestücken weisenden Seite eine nicht-metallische Beschichtung (29) aufweist, deren mit den Wäschestücken in Kontakt kommende Seite die Gleitfläche (32) der Mangelbrücke (28) bildet und/oder die mit den Wäschestücken in Kontakt kommende Seite, vorzugsweise Gleitfläche (32), eines Brückengrundkörpers (30) der jeweiligen Mangelbrücke (28) nach einem oder mehreren der vorhergehenden Ansprüche vorbehandelt ist und die Beschichtung (29) der jeweiligen Mangelbrücke (28) nach einem oder mehreren der vorgehenden Ansprüche ausgebildet, insbesondere bemessen, sowie hergestellt ist.

## Claims

1. Device for mangling laundry items, comprising at least one mangle roller (12) which can be driven to rotate and a mangle trough (13) assigned to the respective mangle roller (12), or at least one ironing body (34) which is assigned a mangle belt (35) which for the most part wraps around the at least one ironing body (34), wherein an inner side (14) of the mangle trough (13) or an outer side (49) of the ironing body (34) forms a smoothing surface (17; 43) along which the laundry items that are to be mangled can move in a sliding manner, and the respective mangle trough (13) or the respective ironing body (34) has, on the respective side thereof facing towards the laundry items, a non-metallic coating (22; 47) whose side that comes into contact with the laundry items forms the smoothing surface (17; 43), **characterized in that** the coating (22; 47) is sprayed, rolled and/or knife-coated onto that surface of the trough basic body (21) of the respective mangle trough (13) or of the base body (48) of the respective ironing body (34) that is to be coated, and, after application thereof, the coating (22, 47) is cured in an oven or an autoclave at temperatures of between 300°C and 450°C.

2. Device according to Claim 1, **characterized in that** the non-metallic coating (22; 47) comprises a polymer material having good sliding properties and/or non-stick properties, preferably polyether ether ketone and fluoropolymer.

3. Device according to Claim 1 or 2, **characterized in that** the coating (22; 47) comprises a mixture of polyether ether ketone and fluoropolymer, wherein preferably the proportion of polyether ether ketone is predominant and/or fluoropolymer is mixed as additive into the polyether ether ketone of the coating (22; 47).

4. Device according to one or more of the preceding claims, **characterized in that** the material of the non-metallic coating (22; 47) has a reduced electrical resistance, preferably a reduced electrical surface resistance, and/or an increased electrical dissipation capability.

5. Device according to one or more of the preceding claims, **characterized in that** the material of the non-metallic coating (22; 47) comprises at least one additive for reducing the electrical resistance, preferably the surface resistance, and/or an increased electrical dissipation capability.

6. Device according to one of the preceding claims, **characterized in that** the non-metallic coating has a layer thickness in the range from 20 µm to 200 µm, preferably 50 µm to 150 µm.

7. Device according to one of the preceding claims, **characterized in that** the respective mangle trough (13) has a trough basic body (21), the coating (22) being applied to the surface thereof that faces towards the respective mangle roller (12), or the ironing body (34) has a base body (48), the coating (47) being applied to the surface thereof that faces towards the mangle belt (35), wherein preferably, prior to the application of the coating (22, 47), the respective surface is roughened, in particular by abrasion, blasting and/or pickling.

8. Device according to Claim 7, **characterized in that** the surfaces, in particular roughened surfaces, of the respective trough basic body (21) or of the respective base body (48) have a mean roughness in the range from 2 µm to 50 µm, preferably 5 µm to 30 µm, and/or at least those surfaces of the trough basic body (21) or of the respective base body (48) that are to be provided with the respective coating (22; 47) are pretreated with an adhesion promoter, wherein the adhesion promoter is preferably a silane, titanate, zirconate, polymer, polyolefin, plasma and/or a mixture of a plurality of the aforementioned substances.

9. Device according to one of the preceding claims, **characterized in that** the coating (22; 47) is applied in the liquid, pasty and/or free-flowing state to those surfaces, preferably surfaces that have been preroughened and/or provided with at least one adhesion promoter, of the trough basic body (21) of the respective mangle trough (13) or of the base body (48) of the respective ironing body (34) that are to be coated, and then curing of the coating (22; 47) is carried out, for example by means of electromagnetic rays and/or thermally.

10. Device according to one of the preceding claims, **characterized in that,** after application thereof, the coating (22, 47) is cured in an oven or an autoclave at temperatures of between 380°C and 400°C.

11. Device according to one of the preceding claims, **characterized in that,** in the case of trough mangles (27) having a plurality of successive mangle troughs (13) or in the case of belt mangles (33) having a plurality of successive ironing bodies (34), a mangle bridge (28) is arranged in each case between successive mangle troughs (13) or ironing bodies (34), wherein the sliding surface (32), which serves for sliding the laundry items over the respective mangle bridge (28), has, on the side thereof that faces towards the laundry items, a non-metallic coating (29) whose side that comes into contact with the laundry items forms the sliding surface (32) of the mangle bridge (28) and/or that side, preferably sliding surface (32), of a bridge basic body (30) of the respective mangle bridge (28) that comes into contact with the laundry items is pretreated according to one or more of the preceding claims, and the coating (29) of the respective mangle bridge (28) is designed, in particular dimensioned, and produced according to one or more of the preceding claims.

## Revendications

1. Dispositif pour repasser des pièces de linge avec au moins un cylindre de repassage (12) apte à être entraîné en rotation et une gouttière de repassage (13) associée au cylindre de repassage (12) respectif ou à au moins un corps en arceau (34) auquel est associée une bande de repassage (35) qui entoure en grande partie ledit au moins un corps en arceau (34), un côté intérieur (14) de la gouttière de repassage (13) ou un côté extérieur (49) du corps en arceau (34) formant une surface de repassage (17 ; 43), le long de laquelle les pièces de linge à repasser sont aptes à être déplacées en glissant, et la gouttière de repassage (13) respective ou le corps en arceau (34) respectif présente, sur son côté respectif orienté vers les pièces de linge, un revêtement non métallique (22 ; 47), dont le côté venant en contact avec les pièces de linge forme la surface de repassage (17 ; 43), **caractérisé en ce que** le revêtement (22 ; 47) est appliqué par pulvérisation, par laminage et/ou par raclage sur la surface à revêtir du corps de base (21) de la gouttière de repassage (13) respective ou du corps de base (48) du corps de repassage (34) respectif, et le revêtement (22, 47) est durci après son application dans un four ou un autoclave à des températures comprises entre 300°C et 450°C.

2. Dispositif selon la revendication 1, **caractérisé en ce que** le revêtement non métallique (22 ; 47) comprend un matériau polymère ayant de bonnes propriétés de glissement et/ou antiadhérentes, de préférence la polyétheréthercétone et le fluoropolymère.

3. Dispositif selon la revendication 1 ou la revendication 2, **caractérisé en ce que** le revêtement (22 ; 47) présente un mélange de polyétheréthercétone et de fluoropolymère, la part de polyétheréthercétone étant de préférence prépondérante et/ou un fluoropolymère étant mélangé comme additif à la polyétheréthercétone du revêtement (22 ; 47).

4. Dispositif selon une ou plusieurs des revendications précédentes, **caractérisé en ce que** le matériau du revêtement non métallique (22 ; 47) présente une résistance électrique réduite, de préférence une résistance électrique de surface réduite, et/ou une capacité de décharge électrique augmentée.

5. Dispositif selon une ou plusieurs des revendications précédentes, **caractérisé en ce que** le matériau du revêtement non métallique (22 ; 47) présente au moins un additif pour réduire la résistance électrique, de préférence la résistance de surface, et/ou une capacité de décharge électrique augmentée.

6. Dispositif selon l'une des revendications précédentes, **caractérisé en ce que** le revêtement non métallique présente une épaisseur de couche comprise entre 20 um et 200 um, de préférence entre 50 µm et 150 µm.

7. Dispositif selon l'une des revendications précédentes, **caractérisé en ce que** chaque gouttière de repassage (13) présente un corps de base (21) de gouttière, sur la surface duquel le revêtement (22) est appliqué en direction du cylindre de repassage (12) respectif, ou le corps en arceau (34) présente un corps de base (48), sur la surface duquel, orientée vers la bande de repassage (35), est appliqué le revêtement (47), la surface respective étant de préférence rendue rugueuse avant l'application du revêtement (22, 47), en particulier par meulage, sablage et/ou décapage.

8. Dispositif selon la revendication 7, **caractérisé en ce que** les surfaces, en particulier les surfaces rendues rugueuses, du corps de base (21) de gouttière respectif ou du corps de base (48) respectif présentent une profondeur de rugosité moyenne située dans une gamme allant de 2 um à 50 um, de préférence de 5 um à 30 um, et/ou au moins les surfaces du corps de base (21) de gouttière ou du corps de base (48) respectif à munir du revêtement (22 ; 47) sont prétraitées avec un agent adhésif, l'agent adhésif étant de préférence un silane, un titanate, un zirconate, un polymère, une polyoléfine, un plasma et/ou un mélange de plusieurs des substances susmentionnées.

9. Dispositif selon l'une des revendications précédentes, **caractérisé en ce que** le revêtement (22 ; 47) est appliqué à l'état liquide, pâteux et/ou fluide sur les surfaces à revêtir, de préférence des surfaces préalablement rendues rugueuses et/ou pourvues d'au moins un agent adhésif, du corps de base (21) de la gouttière de repassage (13) respective ou du corps de base (48) du corps en arceau (34) respectif, puis un durcissement du revêtement (22 ; 47) est réalisé, par exemple par rayonnement électromagnétique et/ou thermique.

10. Dispositif selon l'une des revendications précédentes, **caractérisé en ce que** le revêtement (22, 47) est durci après son application dans un four ou un autoclave à des températures comprises entre 380°C et 400°C.

11. Dispositif selon l'une des revendications précédentes, **caractérisé en ce que**, dans le cas de repasseuses à gouttière (27) avec plusieurs gouttières de repassage (13) successives ou dans le cas de repasseuses à bande (33) avec plusieurs corps en arceau (34) successifs, un pont de repassage (28) est respectivement disposé entre les gouttières de repassage (13) ou les corps en arceau (34) successifs, la surface de glissement (32) servant à faire glisser les pièces de linge sur le pont de repassage (28) respectif présentant un revêtement non métallique (29) sur son côté orienté vers les pièces de linge, dont le côté venant en contact avec les pièces de linge forme la surface de glissement (32) du pont de repassage (28) et/ou le côté venant en contact avec les pièces de linge, de préférence la surface de glissement (32), d'un corps de base de pont (30) du pont de repassage respectif (28) est prétraité selon une ou plusieurs des revendications précédentes et le revêtement (29) du pont de repassage respectif (28) est réalisé, en particulier dimensionné, ainsi que fabriqué selon une ou plusieurs des revendications précédentes.
